# EUROPEAN PATENT APPLICATION

(11) **EP 3 703 402 A1**
(43) Date of publication of application: **02.09.2020**
(21) Application number: 20164422.6
(22) Date of filing: 19.01.2017
(51) Int. Cl.: H04W 8/22, H04W 88/06

(54) **SYSTEM AND METHOD OF AIR INTERFACE CAPABILITY EXCHANGE**

(30) Priority: 19.01.2016 US 201615000611; 25.07.2016 WO PCT/CN2016/091574
(62) Divisional of application: 17741078.4
(71) Applicant: Huawei Technologies Co., Ltd., Longgang District Shenzhen, Guangdong 518129 (CN)
(72) Inventor: AU, Kelvin Kar Kin, Kanata, Ontario K2M 0A2 (CA); MA, Jianglei, Ottawa, Ontario K2M 2W5 (CA)
(74) Representative: Kreuz, Georg Maria

(57) **Abstract**

Methods and devices that provide mechanisms for an air interface capability exchange are disclosed. The air interface capability exchange enables a user equipment device to signal its air interface configuration capabilities to a network device to facilitate software configurable air interface (SoftAI) optimization. The air interface capability exchange involves a UE device signaling information related to an air interface configuration capability type of the device's air interface. The air interface configuration capability type identifies whether the device supports multiple air interface configurations of the air interface. The UE device may also transmit information regarding air interface configuration options that it supports. The network device may determine a configuration for the UE device's air interface based at least in part on the information provided by the UE device.

## Description

### Field of the Application

The present invention relates to wireless communication generally, and, in particular embodiments, to a system and method for air interface capability exchange.

### Background

An air interface is a wireless communications link between two or more communicating devices, such as an evolved NodeB (also commonly referred to as a NodeB, a base station, a transmit point, a remote radio head, a communications controller, a controller, and the like) and a user equipment (UE) (also commonly referred to as a mobile station, a subscriber, a user, a terminal, a phone, and the like). Typically, both communicating devices need to know the air interface to successfully transmit and receive a transmission.

In many current wireless networks, the air interface definition is a one-size-fits-all concept. The components within the air interface cannot be changed or adapted once the air interface is defined.

A software configurable air interface (SoftAI) concept has been proposed to provide a framework for a flexible air interface for 5G networks. It is intended to provide adaptation of different components within the air interface, and to address the potential requirements of future applications.

### Summary

To enable the configurability of the air interface provided by SoftAI, communication devices are required to negotiate and select a same air interface. One problem that appears is that different communication devices vary greatly in their ability to configure the air interface. In particular, legacy devices may only operate in a single, pre-defined air interface. Such devices should not be impacted when transitioning to SoftAI.

One broad aspect of the present invention provides a method for a device that supports an air interface to advise another device, such as a network device, of its air interface capabilities. The method includes transmitting information related to an air interface configurability of the device. The air interface configurability identifies whether the device supports multiple air interface configurations of the air interface.

In one embodiment, the configurability information is categorized, i.e. the information related to the air interface configurability may include air interface configuration capability type of the device.

In these multiple air interface configuration capability types, each air interface configuration capability type may correspond to support for a different level of configurability of the air interface. For example, the air interface configuration capability types may include a first air interface configuration capability type corresponding to support for only a predefined air interface configuration of the air interface. In some cases, the method may further include transmitting information regarding the predefined air interface configuration supported by the device. In one embodiment, the first air interface configuration type is associated with a specific predefined air interface configuration, and therefore the information identifying the device as being of the first air interface configuration capability type may indicate that the device supports the specific predefined air interface configuration.

In some embodiments, the air interface configuration capability types further include a second air interface configuration capability type corresponding to support for multiple air interface configuration options of the air interface.

In some cases, the second air interface configuration capability type may correspond to support for configurability of only a subset of predefined air interface configuration options of the air interface, and the air interface configuration capability types may further include a third air interface configuration capability type corresponding to support for configurability of all of the predefined air interface configuration options of the air interface.

The information regarding an air interface configurability of the device may utilise various parameters related to the air interface of the device. By way of a non-limiting example, the information may include operational frequency range and a maximum transmission bandwidth of the device, and a service type supported by the device. The information may also identify whether the device supports flexible duplex communications and dynamic time division duplex (TDD) configurations; whether the device supports semi-persistent scheduling (SPS) based access and orthogonal / non-orthogonal multiple access. The information may also identify a re-transmission mechanism supported by the device, i.e. a re-transmission mechanism based on an automatic repeat request (ARQ). Furthermore, in one embodiment, the information may identify a numerology parameter supported by the device, e.g. subcarrier spacing and cyclic prefix (CP) length.

In some embodiments, the method further includes transmitting information regarding predefined air interface configuration options supported by the device. In some implementations, the information regarding predefined air interface configuration options supported by the device includes at least one air interface profile index, where each air interface profile index corresponds to a particular predefined air interface configuration.

The method may further include transmitting information regarding further air interface configuration options supported by the device. For example, the air interface may be characterized by a plurality of building blocks, and the information regarding further air interface configuration options supported by the device may include information regarding air interface capability options associated with the plurality of building blocks. In some cases, the information regarding air interface capability options associated with the plurality of building blocks includes air interface capability option indices, where each air interface capability option index corresponds to a respective air interface capability option supported by the device.

In some embodiments, the method also includes receiving information regarding configuration of the air interface of the device. The configuration may have been determined based at least in part on the transmitted information regarding the air interface configuration capability type of the device. The device may then configure the air interface based on the received information. In some cases, the information regarding configuration of the air interface of the device includes an air interface profile index corresponding to an air interface profile that includes a predefined air interface configuration option.

The information regarding the air interface configuration capability type of the device may be transmitted under various circumstances or in response to certain occurrences. For example, in some cases it may be transmitted in response to receiving an enquiry, and in other cases it may be transmitted as part of an initial network access procedure. In some cases, the information may be transmitted over a control channel, such as a radio resource control channel.

Another broad aspect of the present invention provides a device that includes a wireless interface that supports an air interface for the device, a processor operably coupled to the wireless interface, and a computer readable storage medium operatively coupled to the processor. The computer readable storage medium may store programming for execution by the processor. The programming may include instructions to transmit, via the wireless interface, information regarding an air interface configurability of the device. The air interface configurability may identify whether the device supports multiple air interface configurations of the air interface, and may include air interface configuration capability type of the device.

In some embodiments, the air interface configuration capability type is one of multiple air interface configuration capability types, where each air interface configuration capability type corresponds to support for a different level of configurability of the air interface. The air interface configuration capability types may include one or more of the following air interface configuration capability types: a first air interface configuration capability type corresponding to support for only a predefined air interface configuration, a second air interface configuration capability type corresponding to support for multiple air interface configuration options, with configurability of only a subset of predefined air interface configurations of the air interface, and a third air interface configuration capability type corresponding to support for multiple air interface configuration options, with configurability of all of the predefined air interface configuration options of the air interface.

The programming may further include instructions to transmit, via the wireless interface, information regarding at least one predefined air interface configuration option supported by the device.

In some cases, the information regarding at least one predefined air interface configuration option supported by the device may include at least one air interface profile index, where each air interface profile index corresponds to a respective predefined air interface configuration option.

The programming may further include instructions to transmit, via the wireless interface, information regarding at least one further air interface configuration option supported by the device. For example, the air interface may be characterized by multiple building blocks, and the information regarding at least one further air interface configuration option supported by the device may include information regarding air interface capability of the device, e.g. in relation to the building blocks. In some cases, the information regarding air interface capability associated with the building blocks may include air interface capability indices, where each air interface capability index corresponds to a respective air interface capability option supported by the device.

By way of a non-limiting example, the information related to the air interface configurability of the device may include operational frequency range of the device; a maximum transmission bandwidth of the device; and a service type supported by the device. In some embodiments, the information may include at least one of: support of flexible duplex communications and dynamic time division duplex (TDD) configurations; support of semi-persistent scheduling (SPS) based access; support of orthogonal / non-orthogonal multiple access; a re-transmission mechanism based on an automatic repeat request (ARQ); a subcarrier spacing numerology parameter supported by the device; and a cyclic prefix (CP) length numerology parameter supported by the device.

In some embodiments, the programming further includes instructions to receive, via the wireless interface, information regarding configuration of the air interface of the device. The configuration may have been determined based at least in part on the transmitted information regarding the air interface configuration capability type of the device. The programming may also include instructions to configure the air interface of the device based on the received information. The information regarding configuration of the air interface of the device may include an air interface profile index corresponding to an air interface profile that includes a predefined air interface configuration option.

In some cases, the instructions to transmit information regarding an air interface configuration capability type of the device may include instructions to transmit the information in response to receiving an enquiry and/or instructions to transmit the information as part of an initial network access procedure.

Another broad aspect of the present invention provides a method that includes receiving information regarding an air interface configurability of a device that supports an air interface. The air interface configurability may identify whether the device supports multiple air interface configurations of the air interface. The method may further include determining a configuration of the air interface of the device based at least in part on the information regarding the air interface configurability of the device. By way of a non-limiting example, the information related to the air interface configurability may include a service type supported by the device. The service type may be associated with a specific pre-defined air interface configuration or configurability capability.

In some embodiments, there are multiple air interface configuration capability types, with each air interface configuration capability type corresponding to support for a different level of configurability of the air interface. The air interface configuration capability types may include a first air interface configuration capability type corresponding to support for only a predefined air interface configuration of the air interface.

In some cases, the first air interface configuration capability type may be associated with a specific predefined air interface configuration, and it may be determined that the device supports the specific predefined air interface configuration where the information regarding the air interface configuration capability type of the device indicates that the air interface configurability type is the first air interface configuration capability type.

In some embodiments, the method further includes receiving information regarding at least one predefined air interface configuration option supported by the device. In such cases, the configuration of the air interface of the device may be further based at least in part on the information regarding the at least one predefined air interface configuration option supported by the device. In some cases, the information regarding the at least one predefined air interface configuration option supported by the device includes at least one air interface profile index, where each air interface profile index corresponds to a respective predefined air interface configuration option supported by the device.

In some embodiments, the method further includes receiving information regarding at least one further air interface configuration option supported by the device. In such cases, the configuration of the air interface of the device may be further based at least in part on the information regarding the at least one further air interface configuration option supported by the device.

In some cases, the air interface of the device may be characterized by multiple building blocks. In such cases, the information regarding at least one further air interface configuration option supported by the device may include information regarding air interface capability options associated with the building blocks. For example, the information regarding air interface capability options associated with the building blocks may include air interface capability option indices, where each air interface capability option index corresponds to a respective air interface capability option supported by the device.

In some cases, the information regarding the air interface configuration capability type of the device may be received by first transmitting an enquiry to the device and then receiving the information in a response to the enquiry. In other cases, the information regarding the air interface configuration capability type may be received as part of an initial network access procedure by the device.

In some embodiments, the method also includes transmitting information to the device regarding the configuration of the air interface of the device, where the configuration may have been determined as described above.

In accordance with the present disclosure, there is further provided a method comprising transmitting, by a first device to a second device, information indicating configurability type of an air interface of the first device, wherein the configurability type indicates whether the first device supports multiple air interface configurations of the air interface; and transmitting, by the first device, a data packet to the second device, based on a configuration of the air interface in accordance with the configurability type of the first device.

### Brief Description of the Drawings

Embodiments will now be described with reference to the attached drawings, in which:
FIG. 1 illustrates an example heterogeneous communications system according to example embodiments described herein;
FIG. 2 illustrates an example air interface according to example embodiments described herein;
FIG. 3 illustrates a high level view of an example software configurable air interface concept according to example embodiments described herein;
FIGs. 4A to 4C illustrate examples of air interface capability exchange procedures according to example embodiments described herein;
FIG. 5 illustrates a flow diagram of example operations in a first communication device according to example embodiments described herein;
FIG. 6 illustrates a flow diagram of example operations in a second communication device according to example embodiments described herein;
FIG. 7 illustrates a block diagram of an example communication device according to example embodiments described herein;
FIG. 8 illustrates a block diagram of another example communication device according to example embodiments described herein; and
FIG. 9 illustrates a block diagram of a computing system that may be used for implementing the devices and methods according to example embodiments described herein.

### Detailed Description of Embodiments

The present disclosure will be described with respect to example embodiments in a specific context, namely a heterogeneous communications system with different transmission source types and/or different transmission destination types. The different transmission source types may have different transmission capabilities, while the different transmission destination types may have different reception capabilities.

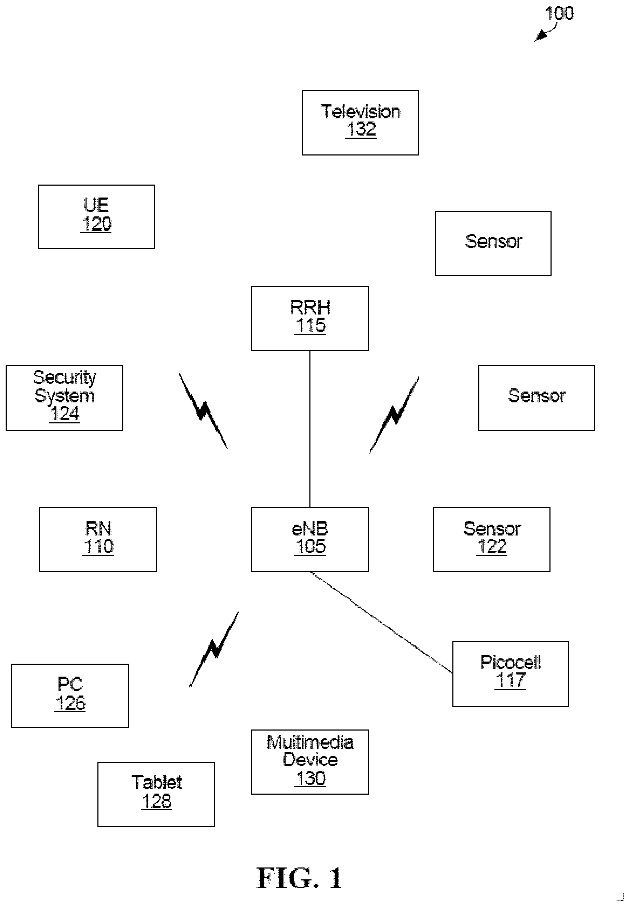

FIG. 1 illustrates a heterogeneous communications system 100. A heterogeneous communications system 100 may include a plurality of transmission sending devices, such as an evolved NodeB (eNB) 105, a relay node (RN) 110, a remote radio head (RRH) 115. Other non-limiting examples of transmission sending devices include network transmit points located in picocells (e.g., picocell 117), femtocells, low-power cells, full-power cells, and the like. It is noted that many transmission sending devices, especially network side transmission sending devices, may be coupled together via a backhaul, which may be wired or wireless. As an example, eNB 105 may be connected to RRH 115 and picocell 117 via backhauls. Heterogeneous communications system 100 may include a plurality of transmission receiving devices, such as a user equipment (UE) 120, a sensor 122, a security system 124, a personal computer (PC) 126, a tablet computer 128, a multimedia device 130, a television 132, and the like. The transmission receiving devices may differ by their communication bandwidth utilization and their capability to support multiple communication formats.

While it is understood that communications systems may employ multiple transmission sending devices capable of communicating with a number of transmission receiving devices, only a small number of transmission sending devices and transmission receiving devices are illustrated for simplicity.

A transmitting-receiving device may be used to refer to a transmission sending device and/or a transmission receiving device. It is noted that a single device may be both a transmission sending device and a transmission receiving devices at different times, in different configurations, and/or with different communications partners. A communications controller may be a device configured to regulate the communications occurring in communications system 100. Examples of communications controllers include eNBs, a switch coupled to and controlling the eNBs, as well as other controlling entities in communications system 100.

The different transmission sending devices may have different transmission capabilities and/or requirements. As an example, an eNB may have multiple transmit antenna, while a picocell may not have multiple transmit antenna or a relatively small number of transmit antennas. Additionally, a picocell may transmit at a lower maximum power level comparable to that of an eNB. Similarly, a PC may have much higher data bandwidth requirements and signal processing capability than a sensor, and a security system may have much stricter reliable message reception requirements than a television. Therefore, in a heterogeneous communications system, such as heterogeneous communications system 100, different pairs of communicating devices (i.e., a transmission sending device and a transmission receiving device) may have different transmission capabilities and/or transmission requirements. The different transmission capabilities and/or transmission requirements typically cannot be met optimally by a single air interface or air interface configuration.

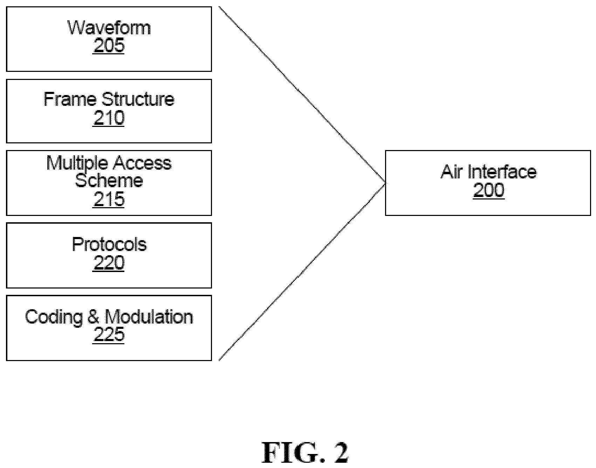

FIG. 2 illustrates a diagram of an air interface 200. Air interface 200 comprises a number of building blocks that collectively specify how a transmission is to be made and/or received. The building blocks of air interface 200 may include waveform building block 205, frame structure building block 210, multiple access scheme building block 215, a protocols building block 220, and a coding and modulation building block 225.

Waveform building block 205 may specify a shape and form of a signal being transmitted. Non-limiting examples of waveform options include Orthogonal Frequency Division Multiplexing (OFDM) based waveform such as filtered OFDM (f-OFDM), Low Density Signature Multicarrier Code Division Multiple Access (LDS-MC-CDMA), Wavelet Packet Modulation (WPM), Faster Than Nyquist (FTN) Waveform, low Peak to Average Ratio Waveform (low PAPR WF), Filter Bank Multicarrier (FBMC) Waveform, Single Carrier Frequency Division Multiple Access (SC-FDMA), Sparse Code Multiple Access (SCMA) and the like. For OFDM-based waveforms, the waveform building block 205 may specify the associated waveform parameters such as sub-carrier spacings and cyclic prefix (CP) overhead. The information provided by the waveform building block 205 may further specify an operational frequency range and a maximum transmission bandwidth of the transmission sending device.

Frame structure building block 210 may specify a configuration of a frame or group of frames. Non-limiting examples of frame structure options include a configurable multi-level transmission time interval (TTI), a fixed TTI, a configurable single-level TTI, a co-existence configuration, and the like. The lengths of a TTI may also be specified. The frame structure information may also specify the capability of the device for flexible duplex communications and dynamic time division duplex (TDD) configurations.

Multiple access scheme 215 may specify how access to a channel is granted for one or more users. Non-limiting examples of multiple access related information include scheduled access, semi-persistent scheduling (SPS) based access, grant-free access, dedicated channel resource (no sharing between multiple users), contention based shared channel resource, non-contention based shared channel resource, orthogonal / non-orthogonal multiple access, cognitive radio based access, and the like.

Protocols building block 220 may specify how a transmission and/or a re-transmission are to be made. Non-limiting examples of transmission and/or re-transmission mechanism options include those that provide information related to a scheduled data pipe size, a signaling mechanism for transmission and/or re-transmission, a re-transmission mechanism based on an automatic repeat request (ARQ) including e.g. positive acknowledgement (ACK) and/or negative acknowledgement (NACK), and the like.

Coding and modulation building block 225 may specify how information being transmitted may be encoded (decoded) and modulated (demodulated) for transmission (reception) purposes. Non-limiting examples of coding and/or modulation technique options include turbo trellis codes, turbo product codes, fountain codes, hierarchical modulation, low PAPR modulation, polar codes, and the like.

Since an air interface comprises a plurality of building blocks, and each building block may have a plurality of candidate technologies (also referred to herein as air interface capability options), it may be possible to configure a large number of different air interface profiles, where each air interface profile defines a respective air interface configuration option. For example, each air interface configuration option may define a respective set of air interface capability options, with a respective interface capability option selected for each of the building blocks of the air interface. Each of the different air interface profiles may be targeted to meet a different set of transmission requirements, including transmission content, transmit condition, receive condition, and the like. In general, the transmission requirements specify the transmission. Then, according to transmission requirements of a pair of communicating transmitting-receiving devices (i.e., the transmission requirements for the transmission), one of the different air interface profiles that best meet the transmission requirements (and hence the transmission) may be selected and used for communications between the pair of communicating transmitting-receiving devices.

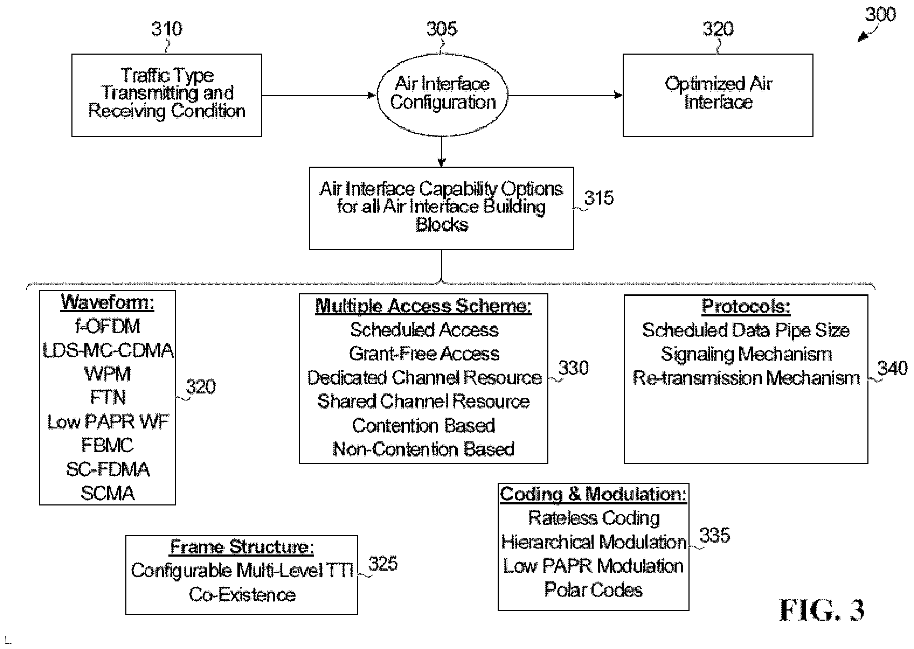

FIG. 3 illustrates a high level view of an example software configurable air interface (SoftAI) concept 300, in which an Air Interface Configuration function 305 determines an Optimized Air Interface 320 to meet a different set of transmission requirements 310 by selecting air interface capability options from among the pool 315 of air interface capability options for all of the air interface building blocks.

In the illustrated example, the building blocks of the air interface include waveform building block 320, frame structure building block 325, multiple access scheme building block 330, coding and modulation building block 325 and protocols building block 340. Various potential air interface capability options are shown for each of the building blocks. Each building block of the optimized air interface 320 may have an air interface capability option selected out of a plurality of possible air interface capability options that is selected to meet transmission requirements 310, including transmission type, transmit condition, receive condition, and the like. As an illustrative example, for waveform building block 320, possible options include f-OFDM, LDS-MC-CDMA, WPM, FTN, low PAPR WF, FBMC, SC-FDMA, SCMA, other variations of single carrier waveforms, and the like. It is further noted that there may be multiple options associated within a given waveform type. For example, a device may have a particular operational frequency range and maximum transmission bandwidth. The device may support multiple different configurations of the f-OFDM waveform type, where each configuration has its own set of associated waveform parameters for the f-OFDM waveform type, e.g. numerology parameters such as subcarrier spacing, CP length, etc. Different frame structure options 325 may include configurable multi-level TTI, flexible duplex and/or dynamic TDD configurations, and so on. Different multiple access scheme options 330 may include scheduled access, grant-free access, access via a dedicated or shared channel resource, contention-based or non-contention based resource, semi-persistence scheduling, orthogonal/non-orthogonal multiple access, etc. As another illustrative example, for coding and modulation building block 335, possible options include rateless codes, hierarchical modulation, low PAPR modulation, polar codes, low-density parity check (LDPC) block codes, multi-dimensional modulation, and the like. The protocol options 340 may include scheduled data pipe size signaling mechanism, ARQ based re-transmission with ACK/NACK, etc. For each building block, one of the possible air interface capability options is selected to meet the transmission requirements 310.

Different devices may differ in the air interface capability options that they support in one or more of the building blocks. For example, a first device, such as a UE, may support multiple waveform options associated with waveform building block 320, while a second device, such as a sensor, may only support a single air interface capability option associated with waveform building block 320. In other words, some devices may support different levels of air interface configurability. Therefore, in order to be able to determine potential air interface configuration options that are supported by a given device, it would be advantageous to be aware of the air interface capabilities of the device, so that the candidates can be limited to only those air interface configuration options that the device is capable of supporting.

Aspects of the present disclosure provide mechanisms for an air interface capability exchange, by which a device signals its air interface capabilities to facilitate SoftAI optimization. The signaling of air interface capability may be performed via higher level signaling, for example RRC signaling. In one embodiment, the air interface capability is communicated via a MAC/physical layer control channel.

According to a first aspect of the present disclosure, a device supporting an air interface may transmit information related to air interface configurability of the device, which indicates whether the device supports multiple air interface configurations. The receiving entity, e.g. a base station, may then determine the air interface configurability based on that information. By way of a non-limiting example, the information may include the service type supported by the device. The base station may then determine the air interface configurability of the device based on the service type, since certain service types may support only one air interface configuration, for example, or several pre-determined air interface configurations. Other information related to air interface configurability may also be used if provided.

In one embodiment, a plurality of air interface configuration capability types are defined, with each air interface configuration capability type corresponding to support for a different level of configurability of the air interface.

In one embodiment, there may be only two different air interface configuration capability types to indicate whether or not a device supports multiple air interface configurations of the air interface. For example, first and second air interface configuration capability types may be defined, with the first type corresponding to support for only a predefined air interface configuration, and the second type corresponding to support for multiple air interface configuration options. Table 1A below is an example of a table of air interface configuration capability types in accordance with such an embodiment, where the first air interface configuration capability type is referred to as AI Type 0 and the second air interface configuration capability type is referred to as AI Type 1.

**Table 1A.**

| **AI Configuration Capability Type** | **Parameter** |
|---|---|
| AI Type 0 | Not configurable |
| AI Type 1 | Configurable |

Table 1B below further clarifies how implementing air interface configurability may be communicated via a dedicated index for configurability, e.g. AI Type 0 or AI type 1. The configurability index defines an air interface capability type. For example, a UE can send the index to a BS. Upon receiving the index, the BS can use a look-up table, e.g. Table 1B below, to identify the UE capability from the index.

**Table 1B.**

| **Index** | **AI Configuration Capability Type** | **Parameter** |
|---|---|---|
| 00 | AI Type 0 | Not configurable |
| 01 | AI Type 1 | Configurable |

In other embodiments, further or different air interface configuration capability types may be defined. For example, in some embodiments a plurality of predefined air interface configuration options may be defined and the second air interface configuration capability type corresponds to support for configurability of only a subset of the predefined air interface configuration options, whereas a third air interface configuration capability type may be defined that corresponds to support for configurability of all of the predefined air interface configuration options. For example, the second air interface configuration capability type may correspond to support for configurability within only a subset of the building blocks of the air interface, and the third air interface configuration capability type may correspond to support for configurability within each of the building blocks of the air interface. Table 2A below is an example of a table of air interface configuration capability types in accordance with such an embodiment, where the first air interface configuration capability type is referred to as AI Type 0, the second air interface configuration capability type is referred to as AI Type 1, and the third air interface configuration capability type is referred to as AI Type 2.

**Table 2A.**

| **AI Configuration Capability Type** | **Parameter** |
|---|---|
| AI Type 0 | Not configurable |
| AI Type 1 | Some Configurability |
| AI Type 2 | Full Configurability |

Similarly to Table 1A, Table 2A below may be used to communicate air interface configurability via a dedicated index.

**Table 2B.**

| **Index** | **AI Configuration Capability Type** | **Parameter** |
|---|---|---|
| 00 | AI Type 0 | Not configurable |
| 01 | AI Type 1 | Some Configurability |
| 02 | AI Type 2 | Full Configurability |

Many communication devices for so-called "vertical" applications, such as embedded sensor devices configured for machine type communication (MTC), may have non-configurable air interfaces that only support a predefined air interface configuration, and thus would be categorized as the first air interface configuration capability type.

For communication devices of the first type (e.g., AI Type 0, Index =0), the information about the predefined air interface configuration that they support may either be implied by their air interface configuration capability type (i.e., the first air interface configuration capability type may be associated with a specific predefined air interface configuration) or in addition to signaling their air interface configuration capability type they may further signal information identifying the predefined air interface configuration that they support.

For communication devices of the other types (e.g., AI Type 1, Index =1, and/or AI Type 2, Index =2), in addition to signaling their air interface configuration capability type they may also transmit information to inform the network about air interface configuration options that they support. For example, such devices may signal information to inform the network about air interface capability options that they support for each of the building blocks of the air interface. However, in some cases where a communication device has full configurability, and is categorized as the third type, (e.g., AI Type 2), it may not be necessary to further signal to the network the specific air interface configuration options that are supported by the device, because the third air interface configuration capability type is understood to indicate that the device supports all available air interface configuration options. This functionality may be conditional on the UE and the network being synchronized in terms of what air interface configuration options are available.

There are many possible ways that a communication device may inform the network about its air interface configuration capability type. Some non-limiting examples are discussed below.

The 3^{rd} Generation Partnership Project (3GPP) specification for Long Term Evolution (LTE) includes a UE category parameter, where higher data rate devices are designated with a higher category. This category parameter is signaled to the network by a device as part of a UE capability list in order to inform the network of the data rate capabilities/requirements of the device.

In one embodiment, a new parameter identifying a device's air interface configuration capability type may be similarly signaled, e.g. via RRC signaling, or via a MAC/physical layer control channel, to the network as part of the UE capability list along with the UE category in order to advise the network of the device's air interface configuration capability type. An example format of a UE capability list in accordance with such an embodiment is provided below, where the "**ue-Category**" field indicates the UE's category and the "**ue-irInterfaceConfigType**" field indicates the UE's air interface configuration capability type:

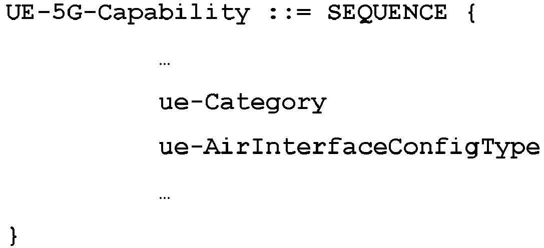

In this embodiment, the device's UE category and air interface configuration capability type are independently configured. This can allow a higher UE category device, such as a machine for video surveillance that has a high data rate requirement, to indicate that it can only support a predefined air interface configuration, e.g., that it is an AI Type 0 device.

In another embodiment, the air interface configuration capability type is associated with the UE category. For example, an extra field may be added to the list of parameters associated with each UE category to indicate the air interface configuration capability type associated with each UE category. An example UE category table in accordance with this embodiment is shown below in Table 3. It is noted that, Table 3 is based Table 4.1A-1 in 3GPP TS 36.306 specification with an extra field added to indicate the air interface configuration capability type associated with each UE category.

**Table 3.**

| **UE DL Category** | **Maximum number of DL-SCH transport block bits received within a TTI** | **Maximum number of bits of a DL-SCH transport block received within a TTI** | **Total number of soft channel bits** | **Maximum number of supported layers for spatial multiplexing in DL** | **AI config type (Index)** |
|---|---|---|---|---|---|
| DL Category 0 | 1000 | 1000 | 25344 | 1 | 0 |
| DL Category 6 | 301504 | 149776 (4 layers, 64QAM) 75376 (2 layers, 64QAM) | 3654144 | 2 or 4 | 1 |
| DL Category 7 | 301504 | 149776 (4 layers, 64QAM) 75376 (2 layers, 64QAM) | 3654114 | 2 or 4 | 1 |
| DL Category 9 | 452256 | 149776 (4 layers, 64 QAM) 75376 (2 layers, 64 QAM) | 5481216 | 2 or 4 | 1 |
| DL Category 10 | 452256 | 149776 (4 layers, 64QAM) 75376 (2 layers, 64QAM) | 5481216 | 2 or 4 | 1 |
| DL Category 11 | 603008 | 149776 (4 layers, 64QAM) 195816 (4 layers, 256QAM) 7536 (2 layers, 64QAM) 97896 (2 layers, 256QAM) | 7308288 | 2 or 4 | 1 |

In this embodiment, the air interface configuration supported by a device can potentially be implicitly indicated (e.g., an indication of AI Type 0 for UE category 0 (MTC) may imply the predefined air interface configuration supported by the device is a specific MTC configuration). However, one potential drawback of this embodiment is that each UE category can only support one air interface configuration capability type.

As noted earlier, in some cases in addition to signaling its air interface configuration capability type, a device may also transmit information regarding the air interface configuration options that it supports. For example, in some embodiments, the network may maintain an air interface building block table with indices for the potential air interface capability options within each building block and a device may indicate the air interface configuration options that it supports by referencing the corresponding indices in the air interface building block table.

An example of such an air interface building block table is shown below in Table 4A, where the different options in each building block represent different air interface capability options in a given building block, e.g., the WF_1, WF_2 and WF_3 indices represent different wave form air interface capability options (e.g., f-OFDM, SC-FDMA, LDS-MC-CDMA, WPM, FBMC, etc., and associated waveform parameters of the waveform), the MA_1 and MA_2 indices represent different multiple access scheme air interface capability options (e.g., dedicated channel resource, contention based, grant-free, etc.), and so on for each of the other building blocks. With respect to the waveform building block, it is noted that the air interface capability options for the waveform building block may include options for the same waveform type but with different associated waveform parameters. For example, the waveform indices WF_1 and WF_2 may both correspond to an OFDM based waveform, such as f-OFDM, but differ in terms of associated waveform parameters, such as sub-carrier spacing and/or cyclic prefix overhead. The different options for waveform, multiple access, frame structure, protocol, MCS, etc. may be indexed as explicitly shown in Table 4B.

**Table 4A.**

| **Waveform** | **Multiple Access** | **Frame Structure** | **Protocol** | **Modulation and Coding** |
|---|---|---|---|---|
| WF_1 | MA_1 | FS_1 | P_1 | MCS_1 |
| WF_2 | MA_2 | FS_2 | P_2 | MCS_2 |
| WF_3 | | FS_3 | | |

**Table 4B.**

| **index** | **Waveform** | **Multiple Access** | **Frame Structure** | **Protocol** | **Modulation and Coding** |
|---|---|---|---|---|---|
| 00 | WF_1 | MA_1 | FS_1 | P_1 | MCS_1 |
| 01 | WF_2 | MA_2 | FS_2 | P_2 | MCS_2 |
| 10 | WF_3 | | FS_3 | | |

A portion of an example of a table that may be used to inform the network about the air interface capability options that are supported by a given device for the waveform, frame structure, multiple access scheme, protocol, and coding and modulation building blocks is shown below in Table 5. As discussed above, in this example the air interface capability options are referenced using their corresponding indices in the exemplary air interface building block table shown in Table 4. The information conveyed in Table 5 may be transmitted by a device in order to inform the network of the air interface configuration options that it supports. This form of table or something similar may be stored in the network to keep a record of the AI capabilities of the device. In another embodiment, the information conveyed in Table 6, namely the air interface profile indices corresponding to respective air interface profiles may be transmitted by a device in order to inform the network of the air interface profiles that it supports.

**Table 5.**

| **UE AI Capability** | **Parameters** |
|---|---|
| supportedWaveform | WF_1, WF_2 |
| supportedFrameStructureConfig | FS_2, FS_3 |
| supportedMultipleAccessScheme | MA_1, MA_3 |
| supportedProtocols | P_1, P_2, P_3 |
| supportedModulationAndCoding | MCS_1, MCS_2 |

**Table 6.**

| | **AI Configuration /Profile 1** | **AI Configuration /Profile 2** | **AI Configuration /Profile 3** |
|---|---|---|---|
| Waveform | WF_1 | WF_2 | WF_1 |
| Frame Structure | FS_2 | FS_1 | FS_1 |
| Multiple Access | MA_1 | MA_1 | MA_1 |
| Protocol | P_1 | P_2 | P_1 |
| Modulation and Coding | MCS_2 | MCS_1 | MCS_1 |

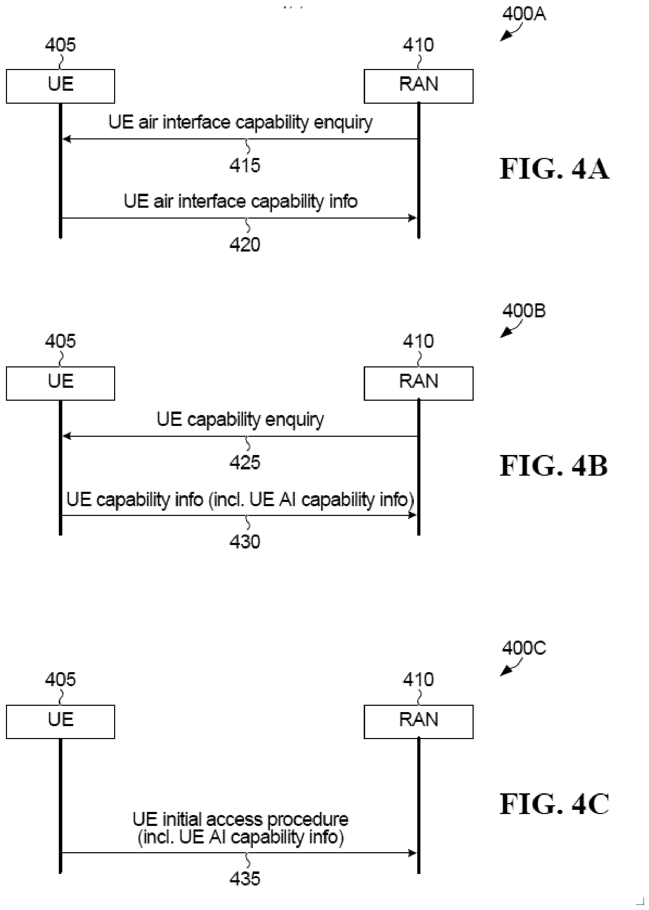

FIGs. 4A to 4C illustrate three examples of air interface capability exchange procedures in which a UE device 405 informs a Radio Access Network (RAN) device 410 of its air interface configuration capabilities according to example embodiments described herein.

FIG. 4A illustrates an example of a standalone air interface capability exchange procedure 400A. In this example, the RAN device 410 transmits a UE air interface capability enquiry 415 to UE 405 requesting the UE to identify its air interface configuration capabilities. Responsive to enquiry 415, UE 405 transmits a message 420 to RAN 410 containing information regarding its air interface configuration capabilities. Both the capability enquiry 415 and the corresponding response message 420 may be transmitted, for example, via RRC signaling, or via a MAC/physical layer control channel.

FIG. 4B illustrates an example air interface capability exchange procedure 400B that is part of a more general UE capability exchange procedure. In this example, the RAN device 410 transmits a UE capability enquiry 425 to UE 405 requesting the UE to identify its capabilities. Responsive to enquiry 425, UE 405 transmits a message 430 to RAN 410 containing information regarding its capabilities, including its air interface configuration capabilities. In other words, the message 430 of FIG. 4B includes the message 420 of FIG. 4A, and further specifies other capabilities of the UE, such as retransmission capability, power level, etc.

FIG. 4C illustrates an example air interface capability exchange procedure 400C that occurs as part of an initial network access procedure. In this example, UE 405 transmits a message 435 to RAN device 410 as part of its initial access procedure to access the RAN, and the message 435 includes information regarding the UE's air interface configuration capabilities.

In some embodiments, the messages 420, 430 and 435 transmitted by UE 405 may include indices in an air interface building block table, e.g. Table 1B, 2B, 4B, to advise RAN 410 of the air interface capability options that UE 405 supports for each of the building blocks of its air interface. In one embodiment, air interface capability options identifiable by an index include information related to operational frequency range, maximum transmission bandwidth, and/or service type.

In some embodiments, the air interface capability exchange procedure occurs in the Radio Resource Control (RRC) layer.

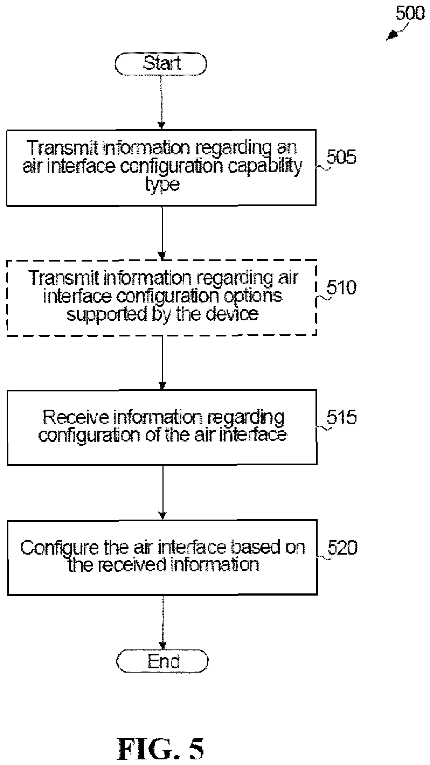

FIG. 5 illustrates a flow diagram of example operations 500 in a first communication device according to example embodiments described herein. Operations 500 may be indicative of operations occurring in a UE device, such as UE 120, sensor 122, PC 126, tablet 128 and the like, a user equipment/device (UE), wireless transmit/receive unit (WTRU), mobile station, fixed or mobile subscriber unit, cellular telephone, personal digital assistant (PDA), smartphone, laptop, computer, touchpad, wireless sensor, or consumer electronics device.

Operations 500 may begin with the device transmitting information regarding an air interface configuration capability type of the device (block 505) to a network controller or a base station. The air interface configuration capability type may identify whether the device supports multiple air interface configurations of the air interface of the device. For example, the air interface configuration capability type may be one of a plurality of air interface configuration capability types, where each air interface configuration capability type corresponds to support for a different level of configurability of the air interface. The configuration capability type may be indicated by an index, such as the index used in Tables 1B, 2B, and 4B. By way of a non-limiting example, the device can be a fifth-generation device (5G) backward-compatible with a fourth-generation (4G) device, and the configuration capability type information may indicate the AI capability of the 5G device.

In one non-limiting embodiment, the device may optionally transmit further information regarding air interface configuration options supported by the device, as shown by a dashed-line block 510. For example, in some embodiments this transmission may occur according to one of the example air interface capability exchange procedures illustrated in Figures 4A to 4C. The air interface may be characterized by a plurality of building blocks and the transmission in the dashed-line optional block 510 may include information regarding air interface capability options associated with the plurality of building blocks that characterize the air interface. The further information in block 510 maybe in the form of indices for different air interface capability options as described in Table 5. In another embodiment, the information maybe in the form of indices of air interface profiles as described in Table 6.

The device may receive information from a base station or a central controller regarding configuration of its air interface (block 515). The configuration may have been determined based at least in part on the information transmitted at block 505 and/or block 510 regarding the air interface configuration capability type and the air interface configuration options supported by the device.

The device may configure its air interface based on the received information (block 520). By way of a non-limiting example, the device may select waveform, multiple access scheme, frame structure, communications protocol, and modulation and coding scheme based on information received from the base station. For example, the information may include a particular air interface configuration, or various air interface configuration options that the device can then select based on a pre-defined set of criteria.

The example method 500 is illustrative of an example embodiment. In other embodiments, similar or different operations could be performed in a similar or different order and/or certain operations may be omitted. Various ways to perform the illustrated operations, as well as examples of other operations that may be performed, are described herein. Further variations may be or become apparent.

For example, in some cases the plurality of air interface configuration capability types includes a first air interface configuration capability type corresponding to support for only a predefined air interface configuration of the air interface. As such, in some cases, for devices of the first air interface configuration capability type, the operation at block 510 may be omitted if the first air interface configuration capability type is understood to correspond to a specific predefined air interface configuration, such as an MTC configuration.

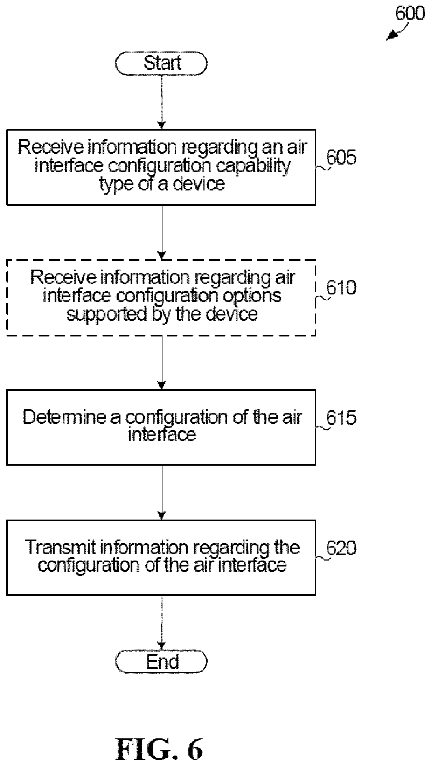

FIG. 6 illustrates a flow chart of example operations in a device according to example embodiments described herein. Operations 600 may be indicative of operations occurring in a network device such as eNB 105, picocell 117 base transceiver station (BTS), a Node-B (NodeB), an evolved NodeB (eNodeB), a Home NodeB, a Home eNodeB, a site controller, an access point (AP), a wireless router, and the like.

Operations 600 may begin with the network device receiving information regarding an air interface configuration capability type of another device that supports an air interface (block 605). The other device may be a UE device, such as UE 120, sensor 122, PC 126, tablet 128, and the like. The air interface configuration capability type of the other device may identify whether the other device supports multiple air interface configurations. For example, the air interface configuration capability type may be one of a plurality of air interface configuration capability types, where each air interface configuration capability type corresponds to support for a different level of configurability of the air interface.

In a non-limiting embodiment, the network device may optionally receive further information regarding air interface configuration options supported by the other device. This step is shown by a dashed-line block 610. For example, in some embodiments this information may be received in accordance with one of the example air capability exchange procedures illustrated in Figures 4A to 4C. In some cases, the air interface may be characterized by a plurality of building blocks and the transmission in block 610 may include information regarding air interface capability options associated with the plurality of building blocks that characterize the air interface, such as building blocks 320-340 described above with reference to FIG. 3. The further information received in the dashed-line optional block 610 of FIG. 6 may be in the form of indices for different air interface capability options as described in Table 5. In another embodiment, the information maybe in the form of indices of air interface profiles as described in Table 6.

The network device may determine a configuration of the air interface of the other device based at least in part on the information received at block 605 and/or block 610 regarding the air interface configuration capability type and the air interface configuration options supported by the other device (block 615). In some embodiments the determination may be further based on satisfying transmission requirements, including transmission content, transmit condition, receive condition, and the like, for transmitting to the other device. For example, the determination may be made in accordance with the SoftAI configuration concept illustrated in FIG. 3. In some embodiments, the determination in block 615 of FIG. 6 may involve the selection of an air interface profile from amongst one or more predefined air interface profiles supported by the other device.

The air interface configuration determined in block 615 may be transmitted to the other device (block 620). For example, in some embodiments the information transmitted to the other device in block 620 may be an index associated with an air interface profile supported by the other device that was selected in block 615. By way of a non-limiting example, both receiving the information (605) and transmitting the information (620) may be performed via RRC signaling, or via a MAC/physical layer control channel.

The example method 600 is illustrative of an example embodiment. In other embodiments, similar or different operations could be performed in a similar or different order and/or certain operations may be omitted. Various ways to perform the illustrated operations, as well as examples of other operations that may be performed, are described herein. Further variations may be or become apparent.

For example, in some cases the plurality of air interface configuration capability types includes a first air interface configuration capability type corresponding to support for only a predefined air interface configuration of the air interface. As such, in some cases, for devices of the first air interface configuration capability type, the operations at blocks 610 and/or 620 may be omitted if the first air interface configuration capability type is understood to correspond to a specific predefined air interface configuration, such as an MTC configuration.

In one generic embodiment, a method of communication between first and second devices, e.g. a UE and a base station, can include transmitting, by the first device to the second device, information indicating configurability type of an air interface of the first device. As explained above, the configurability type indicates whether the first device supports multiple air interface configurations of the air interface. Once the information related to the configurability type is transmitted, the first device can then transmit a data packet to the second device, based on a configuration of the air interface in accordance with the configurability type of the first device. As explained above, the information can include an index indicating the air interface configuration, an air interface configuration type, and/or a plurality of specific air interface parameters.

After the air interface capability exchange procedure is completed e.g. as outlined in FIG. 4, the network controller has information about the air interface capability of the UEs. In one embodiment, the UEs also have information about the air interface capability of the network. The network controller can subsequently signal to the UEs, e.g. in step 620 of FIG. 6, information related to the transmission mechanisms (e.g. waveforms, waveform parameters, numerology parameters, frame structure parameters, multiple access schemes, protocols, coding and modulation schemes etc.). This signalling can be done dynamically, semi-statically, or statically. It can be signalled via higher layer signalling (e.g. RRC signalling), broadcast, multi-cast or unicast signalling, MAC/PHY layer control channels (e.g. downlink control channel similar to LTE's PDCCH). In the case of MAC/PHY layer control channels, the signalling can be more dynamic.

In a following non-limiting example, a UE (UE 1) is capable of supporting 2 sets of numerology (e.g. sub-carrier spacing 1 such as 15kHz and sub-carrier spacing 2 such as 30kHz). Another UE (UE 2) is capable of supporting only 1 set of numerology (e.g. sub-carrier spacing 1 such as 15kHz). After the UE air interface capability exchange (e.g. 400A, 400B, or 400C of FIG. 4) with the network, the network (e.g. scheduler at the base station or central controller) can perform dynamic scheduling to the two UEs based on their numerology capabilities. The network can signal the UEs the resource allocation such as sub-band information for different numerologies. This signalling can be via broadcast, multi-cast or unicast signalling. The signalling can be sent via common or UE-specific control channels. For example, the network can schedule UE 1 in a sub-band with 15kHz sub-carrier spacing and another sub-band with 30kHz sub-carrier spacing). The network can schedule UE 2 only in sub-band with 15kHz sub-carrier spacing. On the other hand, the network can also only schedule UE 1 in only one of the 2 supported numerologies. This can be left to the decision of the scheduler. The scheduling information is sent via downlink control channel.

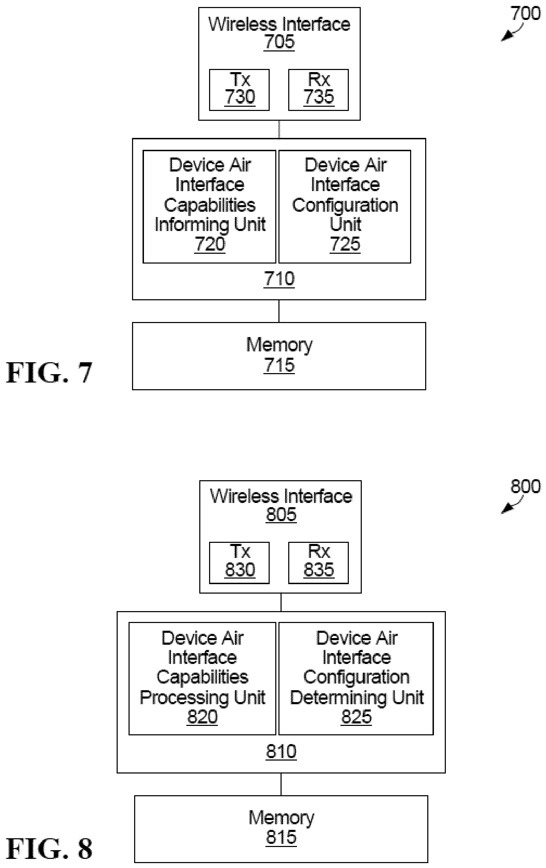

In another non-limiting example, a UE (UE 3) is capable of grant-free and scheduled transmission. Another UE (UE 4) is capable of only scheduled transmission. The network, after the UE air interface capability exchange (e.g. 400A, 400B, or 400C of FIG. 4), can signal to UE 3 via broadcast, multi-cast or unicast signalling information related to grant-free transmission. Higher layer signalling, such as RRC signalling, can be used. Grant-free transmission information can include, for example, the time-frequency resources, modulation and coding scheme (MCS), signature or codebook information (e.g. SCMA codebook(s)), pilots/reference signals information, etc. FIG. 7 illustrates a block diagram of an example communication device 700 according to example embodiments described herein. Communication device 700 may be an implementation of a UE device, such as UE 120, sensor 122, PC 126, tablet 128 and the like. Communication device 700 may be used to implement various ones of the embodiments discussed herein.

As shown in FIG. 7, communication device 700 includes a wireless interface 705 that supports an air interface. Wireless interface 705 includes a transmitter 730 configured to send messages, and the like, and a receiver 735 configured to receive messages, and the like.

A device air interface capabilities informing unit 720 is configured to transmit, via wireless interface 705, information regarding an air interface configuration capability type of the device.

In some embodiments, the air interface configuration capability type identifies whether the device supports multiple air interface configurations of the air interface. For example, the air interface configuration capability type may be one of a plurality of air interface configuration capability types, each air interface configuration capability type corresponding to support for a different level of configurability of the air interface.

In some embodiments, device air interface capabilities informing unit 720 is further configured to transmit, via wireless interface 705, further information regarding air interface configuration options supported by the device's air interface. For example, the device's air interface may be characterized by a plurality of building blocks, and device air interface capabilities informing unit 720 may be configured to transmit further information regarding air interface capability options associated with the plurality of building blocks.

In some embodiment, device air interface capabilities informing unit 720 is configured to transmit the information regarding the air interface configuration capability type of the device and/or the air interface configuration options supported by the device in response to receiving an enquiry and/or as part of an initial network access procedure. For example, device air interface capabilities informing unit 720 may be configured to perform the actions of the UE device 405 according to one or more of the air interface capability exchange procedures illustrated in FIGs. 4A to 4C.

A device air interface configuration unit 725 is configured to receive, via wireless interface 705, information regarding configuration of the device's air interface. The configuration may have been determined based at least in part on the information transmitted by device air interface capabilities informing unit 720. Device air interface configuration unit 725 may be further configured to configure the device's air interface based on the received information.

A memory 715 is configured to store information regarding the device's air interface configuration capabilities, detected signals, decoded signals, and the like.

The elements of communication device 700 may be implemented as specific hardware logic blocks. In an alternative, the elements of communication device 700 may be implemented as software executing in a processor, controller, application specific integrated circuit, or so on. In yet another alternative, the elements of communication device 700 may be implemented as a combination of software and/or hardware.

As an example, transmitter 730 and receiver 735 may be implemented as a specific hardware block, while device air interface capabilities informing unit 720 and device air interface configuration unit 725 may be software modules executing in a processor 710, such as a microprocessor, a digital signal processor, a custom circuit, or a custom compiled logic array of a field programmable logic array. Device air interface capabilities informing unit 720 and device air interface configuration unit 725 may be modules stored in memory 715.

FIG. 8 illustrates a block diagram of an example communication device 800 according to example embodiments described herein. Communication device 800 may be an implementation of a network device, such as eNB 105, picocell 117 and the like. Communication device 800 may be used to implement various ones of the embodiments discussed herein.

As shown in FIG. 8, communication device 800 includes a wireless interface 805. Wireless interface 805 includes a transmitter 830 configured to send messages, and the like, and a receiver 835 configured to receive messages, and the like.

A device air interface capabilities processing unit 820 is configured to receive, via wireless interface 805, information regarding an air interface configuration capability type of another device that supports an air interface. The other device may be a UE device, such as UE 120, sensor 122, PC 126, tablet 128 and the like. The air interface configuration capability type may identify whether the other device supports multiple air interface configurations of the air interface. For example, the air interface configuration capability type may be one of a plurality of air interface configuration capability types, each air interface configuration capability type corresponding to support for a different level of configurability of the air interface.

In some embodiments, device air interface capabilities processing unit 820 is further configured to receive, via wireless interface 805, further information regarding air interface configuration options supported by the other device. For example, the air interface may be characterized by a plurality of building blocks, and device air interface capabilities processing unit 820 may be configured to receive further information regarding air interface capability options associated with the plurality of building blocks.

In some embodiment, device air interface capabilities processing unit 820 is configured to transmit an enquiry, via wireless interface 805, to request the information regarding the air interface configuration capability type of the other device and/or the air interface configuration options supported by the other device. In some cases, device air interface capabilities processing unit 820 may be configured to receive the information as part of an initial network access procedure. For example, device air interface capabilities processing unit 820 may be configured to perform the actions of the RAN device 410 according to one or more of the air interface capability exchange procedures illustrated in FIGs. 4A to 4C.

A device air interface configuration determining unit 825 is configured to determine a configuration for the other device's air interface. The configuration may be based at least in part on the information received by device air interface capabilities processing unit 820 regarding the air interface configuration capability type and/or the air interface configuration options supported by the other device. The configuration may be further based on satisfying transmission requirements, including transmission content, transmit condition, receive condition, and the like, for transmitting to the other device. For example, the determination may be made in accordance with the SoftAI configuration concept illustrated in FIG. 3.

Device air interface configuration determining unit 825 may also be configured to transmit, via wireless interface 805, information regarding the configuration of the other device's air interface.

A memory 815 is configured to store information regarding the other device's air interface configuration capabilities, building block air interface capability options, selected air interface capability options of building blocks, transmission requirements, and the like.

The elements of communication device 800 may be implemented as specific hardware logic blocks. In an alternative, the elements of communication device 800 may be implemented as software executing in a processor, controller, application specific integrated circuit, or so on. In yet another alternative, the elements of communication device 800 may be implemented as a combination of software and/or hardware.

As an example, transmitter 830 and receiver 835 may be implemented as a specific hardware block, while device air interface capabilities processing unit 820 and device air interface configuration determining unit 825 may be software modules executing in a processor 810, such as a microprocessor, a digital signal processor, a custom circuit, or a custom compiled logic array of a field programmable logic array. Device air interface capabilities processing unit 820 and device air interface configuration determining unit 825 may be modules stored in memory 815.

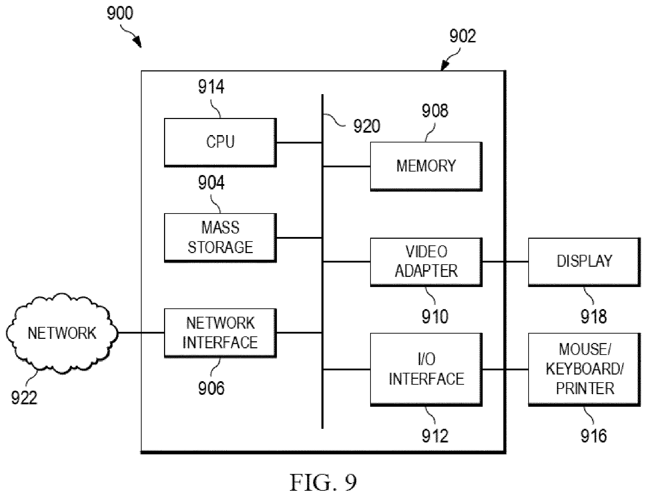

FIG. 9 is a block diagram of a computing system 900 that may be used for implementing the devices and methods disclosed herein, Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 900 includes a processing unit 902. The processing unit includes a central processing unit (CPU) 914, memory 908, and may further include a mass storage device 904, a video adapter 910, and an I/O interface 912 connected to a bus 920.

The bus 920 may be one or more of any type of several bus architectures including a memory bus or memory controller, a peripheral bus, or a video bus. The CPU 914 may comprise any type of electronic data processor. The memory 908 may comprise any type of non-transitory system memory such as static random access memory (SRAM), dynamic random access memory (DRAM), synchronous DRAM (SDRAM), read-only memory (ROM), or a combination thereof. In an embodiment, the memory 908 may include ROM for use at boot-up, and DRAM for program and data storage for use while executing programs.

The mass storage 904 may comprise any type of non-transitory storage device configured to store data, programs, and other information and to make the data, programs, and other information accessible via the bus 920. The mass storage 904 may comprise, for example, one or more of a solid state drive, hard disk drive, a magnetic disk drive, or an optical disk drive.

The video adapter 910 and the I/O interface 912 provide interfaces to couple external input and output devices to the processing unit 902. As illustrated, examples of input and output devices include a display 918 coupled to the video adapter 910 and a mouse/keyboard/printer 916 coupled to the I/O interface 912. Other devices may be coupled to the processing unit 902, and additional or fewer interface cards may be utilized. For example, a serial interface such as Universal Serial Bus (USB) (not shown) may be used to provide an interface for an external device.

The processing unit 902 also includes one or more network interfaces 906, which may comprise wired links, such as an Ethernet cable, and/or wireless links to access nodes or different networks. The network interfaces 906 allow the processing unit 902 to communicate with remote units via the networks. For example, the network interfaces 906 may provide wireless communication via one or more transmitters/transmit antennas and one or more receivers/receive antennas. In an embodiment, the processing unit 902 is coupled to a local-area network 922 or a wide-area network for data processing and communications with remote devices, such as other processing units, the Internet, or remote storage facilities.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by a establishing unit/module for establishing a serving cluster, a instantiating unit/module, an establishing unit/module for establishing a session link, an maintaining unit/module, other performing unit/module for performing the step of the above step. The respective units/modules may be hardware, software, or a combination thereof. For instance, one or more of the units/modules may be an integrated circuit, such as field programmable gate arrays (FPGAs) or application-specific integrated circuits (ASICs).Numerous modifications and variations of the present application are possible in light of the above teachings. It is therefore to be understood that within the scope of the appended claims, the application may be practised otherwise than as specifically described herein.

In addition, although described primarily in the context of methods, device and equipment, other implementations are also contemplated, such as in the form of instructions stored on a non-transitory computer-readable medium, for example.

## Claims

1. A method comprising:
transmitting (420, 430, 435, 505) over a radio resource control, RRC, channel, by a device that supports a configurable air interface (200), information regarding an air interface configuration capability type of the device, the air interface configuration capability type identifying support for configuring at least two air interface components, the air interface components comprising at least a waveform component (205), a frame structure component (210), a multiple access scheme component (215), a protocol component (220), and a modulation and coding scheme, MCS, component (225); and
receiving (515), by the device, information regarding a configuration of the air interface of the device, the configuration comprising a configuration for the at least two of the air interface components.

2. The method of claim 1, wherein the waveform component comprises an Orthogonal Frequency Division Multiplexing based waveform option and a Single Carrier Frequency Division Multiple Access waveform option.

3. The method of claim 1 or claim 2, wherein the frame structure component comprises an indication of a length of a transmission time interval.

4. The method of any one of claim 1 to claim 3, wherein the multiple access scheme component comprises an option for a contention based shared channel resource.

5. The method of any one of claim 1 to claim 4, wherein the protocol component comprises a signaling mechanism for transmission and/or re-transmission.

6. The method of any one of claim 1 to claim 5, wherein the MCS component comprises an option for low peak-to-average power ratio modulation.

7. A device comprising:
a wireless interface that supports an air interface for the device;
a processor operatively coupled to the wireless interface; and
a computer readable storage medium operably coupled to the processor, the computer readable storage medium storing programming for execution by the processor, the programming comprising instructions to implement a method in accordance with any one of claims 1 to 6.

8. A method comprising:
receiving (605) information over a radio resource control, RRC, channel, the information regarding an air interface configuration capability type of a device that supports a configurable air interface, the air interface configuration capability type identifying support for configuring at least two air interface components, the air interface components comprising at least a waveform component, a frame structure component, a multiple access scheme component, a protocol component, and a modulation and coding scheme, MCS, component; and
determining (615) a configuration of the air interface of the device based at least in part on the information regarding the air interface configuration capability type of the device, the configuration of the air interface comprising a configuration for the at least two of the air interface components.

9. The method of claim 8, wherein the waveform component comprises an Orthogonal Frequency Division Multiplexing based waveform option and a Single Carrier Frequency Division Multiple Access waveform option.

10. The method of claim 8 or claim 9, wherein the frame structure component comprises an indication of a length of a transmission time interval.

11. The method of any one of claim 8 to claim 10,
wherein the multiple access scheme component comprises an option for a contention based shared channel resource.

12. The method of any one of claim 8 to claim 11,
wherein the protocol component comprises a signaling mechanism for transmission and/or re-transmission.

13. The method of any one of claim 8 to claim 12,
wherein the MCS component comprises an option for low peak-to-average power ratio modulation.

14. A device comprising:
a wireless interface that supports an air interface for the device;
a processor operatively coupled to the wireless interface; and
a computer readable storage medium operably coupled to the processor, the computer readable storage medium storing programming for execution by the processor, the programming comprising instructions to implement a method in accordance with any one of claims 8 to 13.
